# EUROPEAN PATENT SPECIFICATION

(11) **EP 3 368 973 B1**
(45) Date of publication and mention of the grant of the patent: **23.09.2020**
(21) Application number: 16860463.5
(22) Date of filing: 23.09.2016
(51) Int. Cl.: G06F 7/04, G06F 11/00, G06F 12/14, G06F 12/16, G06F 21/00, G06F 21/57, H04L 29/06, H04L 29/08

(54) **MULTI-LAYER COMPUTER SECURITY COUNTERMEASURES**
MEHRSCHICHTIGE GEGENMASSNAHMEN FÜR COMPUTERSICHERHEIT
CONTRE-MESURES DE SÉCURITÉ INFORMATIQUE MULTICOUCHE

(30) Priority: 26.10.2015 US 201514922436
(43) Date of publication of application: 05.09.2018
(73) Proprietor: Shape Security, Inc., Palo Alto, California 94302 (US)
(72) Inventor: CALL, Justin D., Santa Clara, California 95051 (US); HIDAYAT, Ariya, Mountain View, California 94040 (US); PEACOCK, Timothy Dylan, San Francisco, California 94110 (US); YANG, Siying, Cupertino, California 95014 (US)
(74) Representative: Grund, Martin
(86) International application number: PCT/US2016/053392
(87) International publication number: WO 2017/074619

(56) References cited:
- US-B1- 8 769 692
- US-B1- 8 997 226
- US-B1- 9 075 990
- US-B1- 9 112 900
- US-B2- 8 646 085
- US-B2- 8 869 281

## Description

### TECHNICAL FIELD

This document relates to systems and techniques for interfering with the operation of computer malware via coordinated application of security countermeasures, as a mechanism for improving computer system security.

### BACKGROUND

Much of our commerce now occurs in the form of ecommerce, through computer users who access services over the Internet and using the World Wide Web. Because this commerce involves money, it draws unsavory characters to its periphery-in the form of fraudsters. The goal of such people is to intercept or otherwise interfere with the activities of legitimate commerce so as to identify confidential information like account numbers, passwords, user IDs, and the like, as a mechanism toward stealing money from such users or from the organizations that provide services to such users. For example, through a technique known as a "Man in the Browser" attack, malware may be loaded on a client computer and may attempt to intercept information such as account numbers and passwords where a user interacts with a banking site, or passwords and credit card information when the user interacts with an on-line retail store.

Various approaches have been taken to identify and prevent such malicious activity. For example, some approaches install defensive software on client computers. Alternative approaches run various kinds of analysis tools on the transactions and/or network traffic on a server system to detect improper activity.

US8,869,281 B2 discloses systems and techniques by which web code is modified before it is served over the internet by a server system so as to make more difficult the exploitation of the server system by clients that receive the code (including clients that are infected without their users' knowledge). The modifications may differ for different times that a web page and related content are served, whether to the same client computer or to different client computers.

### SUMMARY

The invention is defined by the independent claims. Preferred embodiments are defined in the dependent claims.

The details of one or more embodiments are set forth in the accompanying drawings and the description below. Other features and advantages will be apparent from the description and drawings, and from the claims.

### DESCRIPTION OF DRAWINGS

FIG. 1 is a conceptual diagram showing deployment of updated computer security countermeasure packages.
FIG. 2A shows a system for deploying updated security countermeasure packages.
FIG. 2B shows schematically a process and system for a persistent token security countermeasure.
FIG. 2C is a state diagram of a security system using a persistent security token.
FIG. 3A is a flow chart of a process for serving transcoded content in a continually-updated manner.
FIG. 3B is a flowchart of a process for using a persistent token to maintain web security.
FIG. 4 is a swim lane diagram of a process for serving transcoded content in a continually-updated manner.
FIG. 5 shows a system for serving polymorphic and instrumented code.
FIG. 6 shows an example computer system.

Like reference symbols in the various drawings indicate like elements.

### DETAILED DESCRIPTION

Described below are systems and techniques for deflecting and detecting malware activity on client devices to which a server system serves computer code. The examples discussed below may also be used in other settings to insert security countermeasures into a content serving system. The particular examples discussed here involve, among other things, performing analysis on content before the content is called to be served. Such analysis can allow the content to be compressed through minification, and also permit the insertion of security countermeasures into the content. The minification may be beneficial in reducing the network bandwidth required to serve the content, and also may make reverse engineering of the code/content more difficult for human or automatic mechanisms that access the code/content. The countermeasures may help a content provider avoid having its customers or its own computers exploited by malware, such as malware that attempts to obtain confidential information from a web site or the customers' client computers.

The security server system may employ a number of countermeasures either individually or in combinations as packages of multiple countermeasures, and may repeatedly change the packages that are used over time and over locations on a web site (e.g., when a user moves from unsecure to secure pages and back). For example, a countermeasure may be initially deployed, and instrumentation code served with the web content (or other mechanisms that provide out-of-band communications) may report back activity to indicate a level of malware interaction with, and penetration of, the countermeasures. Data from such monitoring of client devices may be used to identify the mode of action by the malware, and alternative or and/or additional countermeasure(s) that may be deployed that is/are determined to be a countermeasure(s) that is/are effective against that identified mode of action. The monitoring may then continue as additional content is served with the new set of countermeasures, and the process may continuously cycle as new countermeasures are developed, new threats are identified, and the new countermeasures (individually or in packages of multiple countermeasures) are deployed. Similar failed efforts by malware to interact with stale code may be detected by identifying stale state variable names in HTTP transactions, e.g., where a script blindly submits pre-set name-value pairs--where such detection may occur at a server that receives the HTTP transactions, and without a need for providing injection code.

A next round of countermeasures may be selected by pre-analysis and/or trial-and-error. Analysis may involve identifying a particular characteristic of a current threat in a population of client devices, and identifying parameters of each of various countermeasures so as to identify the countermeasure or group of countermeasures that will best address the current threat. For trial-and-error, new countermeasures or combinations of countermeasures may be deployed in small test groups and closely monitored to obtain an initial understanding of how effective a countermeasure may be against the threat. If a countermeasure is determined to be effective, it may be rolled out more broadly across other environments (e.g., different business enterprises protected by different security clusters) that are similar to the one in which it was initially tested (e.g., tested and deployed with log in pages that have a structure that is similar to each other).

Various forms of analysis may be performed in order to implement security countermeasures before a determination is made to apply the countermeasures to particular content. For example, content may initially be templatized through analysis, so as to identify elements in the content that may be affected by one or more countermeasures, such as by identifying names of functions and variables that can be changed in a polymorphic manner without affecting the presentation of the content. Also, data entry fields may be identified, in preparation for applying countermeasures that may mask, from bot nets, data that is entered into the fields, such as countermeasures that mask field names and labels (e.g., by turning their text into images), and countermeasures that insert dummy fields to distract malware (and perhaps include code to cause those dummy fields to be filled automatically with dummy information). The particular elements for which transformation may be performed may be mapped into a template (i.e., templatized) in advance, and the template may be used for further analysis to apply different countermeasures later (e.g., that alter just function/variable names, that make alterations to data input tables, etc., and combinations of particular changes).

Other countermeasures may impose access limits when a user is inside a particular area of a site (e.g., on a web page that is part of a group identified as needing additional security). When the user requests a URL that is inside such an area, a session token may be generated and then stored and managed as a cookie, and may include a timestamp, a session ID value, a digital signature, and an index of a key used to sign the data. Such token may be generated in response to authenticating the user. Subsequent requests for URL's inside the particular area may result in the cookie data being obtained, and being checked by a security device at or adjacent the servers providing the content (e.g., at a security intermediary system). The token may be valid until the user leaves the particular area and moves into a different area of the web site, or when a timeout occurs. Each time the user enters another URL in the particular area, the token may be checked before giving the user access. If the token does not check out, the user may be asked for credentials, and a potential intrusion attempt may be logged and analyzed. Also, different countermeasures may be applied to content served from the particular area, as opposed to content served from outside that area, and the packages of countermeasures for content served from inside the area may change over time, as may the countermeasures for content served outside the area, and such changes may be independent of each other. When the user exits the particular area and subsequently re-enters the particular area, a new token may be generated and may be saved as a cookie or similar item.

Also, with respect to selecting and deploying countermeasures, one or more complete countermeasures or countermeasure packages may be fully identified and generated in advance of a decision to switch to those countermeasures, and multiple such options may be "stacked" for future use, either linearly (with the next countermeasure predetermined and the countermeasure after that predetermined) or in parallel (with multiple countermeasures available for immediate deployment). Such preparation of countermeasure packages may allow a system to switch quickly to upgraded countermeasures as soon as an unreasonable threat is discovered, and without additional analysis required.

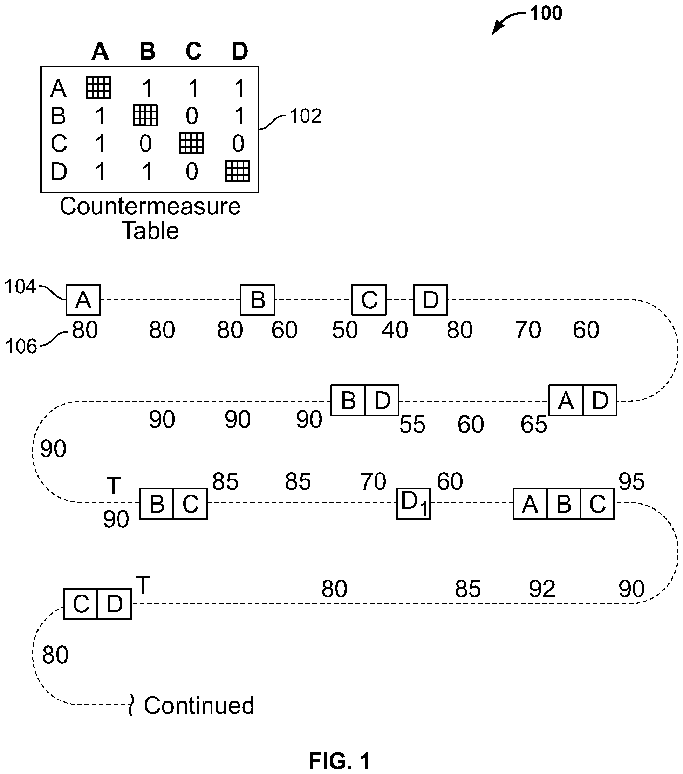

FIG. 1 is a conceptual diagram showing deployment of updated computer security countermeasure packages. The figure shows an example implementation 100 that involves a system that deploys a number of predefined security countermeasures along with content that is served by the system to client devices that have requested the content. For example, a Web server system by itself or supplemented with a security server system may add security countermeasures to web code that it serves over the Internet. Such security countermeasures may take a variety of forms, including countermeasures designed to deflect and detect malware, such as bots that are members of bot nets. The countermeasures may, for example, alter served code polymorphically so as to interfere with the attempts of client-side malware to interact with or analyze the code, may detect and deflect and analyze such attempted interaction, and may provide security in the form of persistent tokens that a client device must provide in order to gain access to resources in certain areas, such as certain web pages for a web site (and wherein failure to provide the token in proper circumstances may be inferred to be an attempt at infiltrating a system).

Detection may occur by serving the original web content along with injected instrumentation code that executes on a client device to monitor characteristics of the client device (e.g., device model, hardware configuration, operating system type and version, browser type and version, and other aspects), characteristics of user interaction with the client device to determine whether the user is human or not, and interaction by third-party software with the web content that is served, such as to determine that the third-party software makes a call to an object's name that was changed as part of serving the code, so as to indicate that the third-party software is not aware of what the security system is doing to alter the code, and therefore that the third-party software could be malware.

Deflection may occur by polymorphically serving the content-i.e., changing parts of the content that do not substantially affect the content's presentation to a user, from one serving to the next, with the changes occurring frequently enough to prevent malware or malicious users from being able to reverse engineer the content. Such changes may also be used as part of detection, by detecting that third-party software attempted to interact with untransformed versions of the content (where the detection may occur using software sent to the client with the content or by using servers to monitor follow-up submissions from the clients after they receive the content). Deflection may also occur by enforcing a requirement that a user submit, e.g., from a cookie, a properly formatted and contented persistent token when the user passes from one URL within a first area of resources to another URL within a second area of resources (such as web pages).

In the example shown in FIG. 1, a countermeasure table 102 is shown that identifies the ability of four different countermeasures to be used with each other in pairs of countermeasures. Each countermeasure is listed along the X-axis and Y-axis, with the intersection of the two axes showing the workability of the two countermeasures together, where a value of 1 indicates positive workability and a value of 0 represents that they do not work together and thus should not be deployed together. The value may also have additional levels so as to indicate a degree to which the two countermeasures have been determined to work together constructively (e.g., where -1 shows they are destructive, and +1 shows they have the highest level of synergy with each other, and non-integer numbers between represent gradations between the two ends).

The table 102 may have been created by a creator of the countermeasures who, by her understanding of the manner in which each countermeasure works, also understood which countermeasures would not work well together, such as by one countermeasure canceling out the effectiveness of another countermeasure or breaking another countermeasure. The ability of two countermeasures to work together may also be determined experimentally, such as by serving code and applying both countermeasures to that code, followed by determining whether the code was served successfully and rendered successfully, and whether the countermeasures successfully defended against either real or simulated attacks. The table 102 in this example is relatively simplified for clarity, and in actual implementation may include (a) a large number of additional countermeasures (and need not be represented as a table-based data structure), (b) the ability to combine more than two countermeasures together (so it would be a more than two-dimensional table), (c) indications of the degree to which countermeasures are complementary or instead destructive to each other, and (d) other information that may be useful in selecting single countermeasures or groups of countermeasures for application to content that is to be served.

The remainder of the figure shows a timeline that begins at the top and ends at the bottom, and shows countermeasures that may have been applied over time to a particular web page or other group of web content that is served by a Web server system, and processed by a security server system. As shown by box 104, the letters in the boxes indicate an ID for a countermeasure or countermeasures that were applied during a particular time the content was served by a system. As indicated by numeral 106, the relative effectiveness of the countermeasure or countermeasures on a 100-point scale is shown. In this example, then, it is intended to show in a relatively clear manner how applied countermeasures can be selected and updated over time as the observed effectiveness of the currently-applied countermeasures waxes and wanes.

Beginning at the start of the timeline, the server system initially serves code with countermeasure A applied to it. At the beginning, the single countermeasure is effective at a level of 80. After a determined time, the system switches to countermeasure B, even though the effectiveness of countermeasure A had not waned yet. For example, the system may be programmed to server a particular countermeasure package for a maximum time period (or maximum number of servings) for a particular effectiveness level, where countermeasures with greater effectiveness are served for a longer threshold period than are countermeasure with lower effectiveness. This may ensure that the system provides a moving target even if the system does not yet "see" that the current target is failing to work (whether it is actually failing or not).

Upon rolling out countermeasure B, that countermeasure is immediately determined to be worse in terms of effectiveness than was countermeasure A, showing an initial effectiveness of 60 and then falling to 50. That effectiveness is deemed too low to continue using the countermeasure. A threshold for triggering a change to a new countermeasure may take into account a variety of factors, including the measured current effectiveness of the countermeasure, whether the countermeasure is trending upward or downward in effectiveness, the amount of time the particular countermeasure has been used, the required security level needed for serving the particular code, whether the presence of a new security threat has been identified by the system or outside the system (e.g., by a major software provider issuing a particular security alert), and the amount of work that will be needed to identify and switch to a new countermeasure.

Moving further now along the timeline, countermeasure C is put in place and the system identifies the effectiveness of countermeasure C as being very low, at a level of 40. As a result, the system immediately switches to countermeasure D. Its effectiveness begins high, at 80, but soon begins to drop, through 70, and 60-e.g., because the bots in a bot net identify its presence and begin reacting to it so as to get around it. As a result, it may be inferred that countermeasure D was an effective countermeasure, but was easily studied and compromised by malware that begin taking advantage of it quickly. Therefore, because the performance was relatively low and dropping, the system determined to switch to a new countermeasure even though performance had not sunk as far as it had for countermeasure B (i.e., countermeasure D was vectoring more quickly in the wrong direction, so it was dropped even though it was currently better than the other countermeasure had been when it was dropped).

**The** next countermeasure selected is countermeasure A, but it does not replace countermeasure D, and instead supplements countermeasure D. Such an action may take place by the system recognizing that countermeasure A and countermeasure D were the two most effective countermeasures when used by themselves, and positing that they may be the best when combined (and also on analyzing information that indicates that the type of changes made by those countermeasures are complementary types of changes to each other). Although countermeasure D was previously compromised, the system, either automatically or through direction from an administrator, may determine that countermeasure A may be sufficient to plug the holes in countermeasure D, and that the two countermeasures may have a synergistic effect with each other. As shown further along the timeline, the synergistic effect did not result, with the performance equaling 65, then falling to 60, and falling further to 55. As a result, the system again decides on new countermeasures, and replaces countermeasure A with countermeasure B. Such selection may be made, for example, because countermeasure B was observed previously to have the third highest effectiveness of individual countermeasures (behind A and D). As shown in the figure, the combination of countermeasure B and countermeasure C is very effective - even better than the A/D countermeasure that had involved the two best individual countermeasures.

**As** shown, the B/C combination is served for five evaluation cycles and its effectiveness stays strong throughout that time. However, the system is programmed to switch countermeasures even when their current performance is strong, if they have been used for a predetermined time, where the threshold time may vary depending on performance level of the countermeasures. For example, countermeasures that are performing at a level of 80 may be allowed to continue in use for a shorter time than countermeasures that are performing at a level of 90. Moving along the line then, countermeasure D is replaced with countermeasure C. Surprisingly, the combination of D/C performs relatively well, registering scores of 85, 85, and 70, despite the two applied countermeasures having the worst scores among the individual scores, so that it is possible the two countermeasures have some form of synergy for each other. Again, however, the relative performance starts falling and the countermeasures are changed again. Here, the final score is not low, but the system may have determined that the score fell too much in too little time (the vector was really bad), thus indicating that the combination of countermeasures had been compromised and was quickly being thwarted by malware in the form of a bot net.

The combination of countermeasures is then replaced by an updated version of countermeasure D. For example, after countermeasure D was determined to have been compromised, an administrator or a system automatically may have updated a parameter for countermeasure D, or may have rewritten a portion of countermeasure D to make it operate in a manner similar to the manner it was previously operating, but in a slightly different manner so as to throw off any malware that had compromised the original version of countermeasure D. In another example, the code and operations for the countermeasure may be kept the same, but parameters that change the countermeasure may be updated. However, this new version of countermeasure D has mediocre performance.

As a result, a new combination that involves three countermeasures is attempted (though it is not shown in table 102). This combination is very effective, starting with a score of 95, which drops slightly, then recovers, then drops more. However, the score may be sufficient to maintain the three-way combination of countermeasures as the applied countermeasures for a long period of time. Eventually, the system is programmed to replace the combination so as to ensure that it is not used for a long enough period to be compromised. For example, the system may understand that its monitoring and scoring of countermeasure performance is not perfect, and that it may be generating false negatives, so that malware may have infiltrated a particular combination of countermeasures without the system knowing it. As a result, the system may automatically switch countermeasures periodically, e.g., an anti-malware "Crazy Ivan," even though its measures of countermeasure effectiveness show no problem. (And as with a traditional Crazy Ivan, the change in operation of code, before and after the change in countermeasures, may be used to learn about the threat.) Finally, at the very end of the section of the timeline that is shown, the countermeasures switch to a combination of C/D. This combination is relatively effective, with a score of 80, and continues to be used into the future.

**This** type of process may be performed continuously and iteratively as a web or other content server system serves code and other resources to requesting clients for which security is needed. The process is dynamic and adaptive and closed loop, in that the system monitors how well current or past countermeasures are performing and uses such monitored information to determine when to make a change in countermeasure policies.

Moreover, multiple countermeasures or groups of countermeasures may be served simultaneously by the system for a particular set of content (e.g., a web site), where different countermeasures are applied to different parts of the set. For example, individual web pages for a web site may be identified as occupying one of multiple different security zones. Each zone may be determined by a developer of the web site to have a particular common needed security level. A higher security zone may have countermeasure X applied to it, while pages in a lower security area may have countermeasures Y/Z applied in combination to them. The pages in the higher security zone may also be associated with a persistent token that is used to more securely verify that the requester of resources in such a zone is the real user, and not a fraudulent interloper. Such use of persistent tokens is discussed in more detail below, as are the other features discussed to this point.

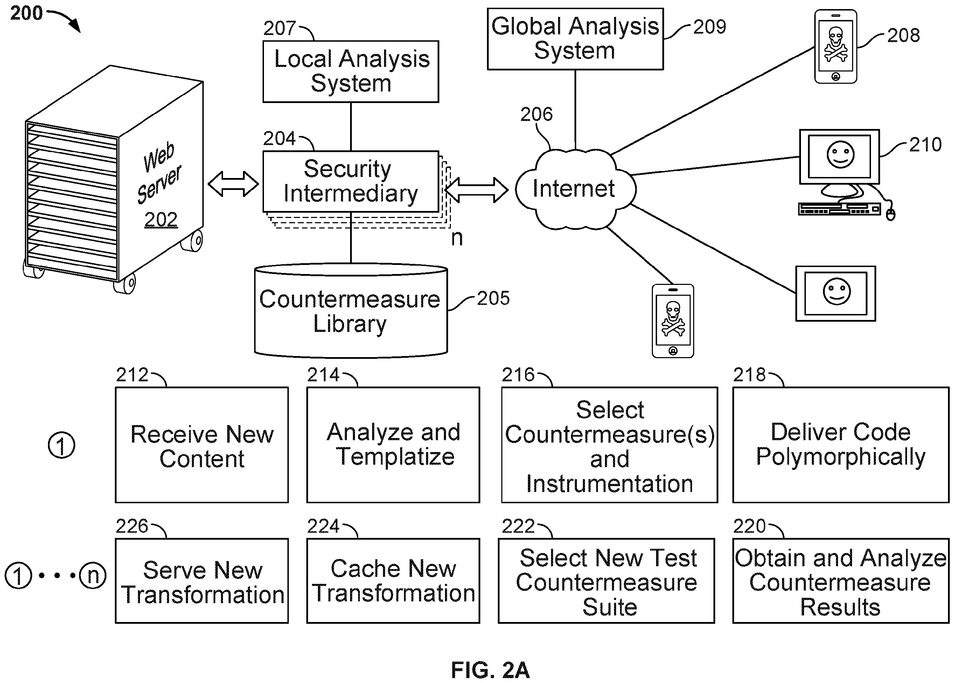

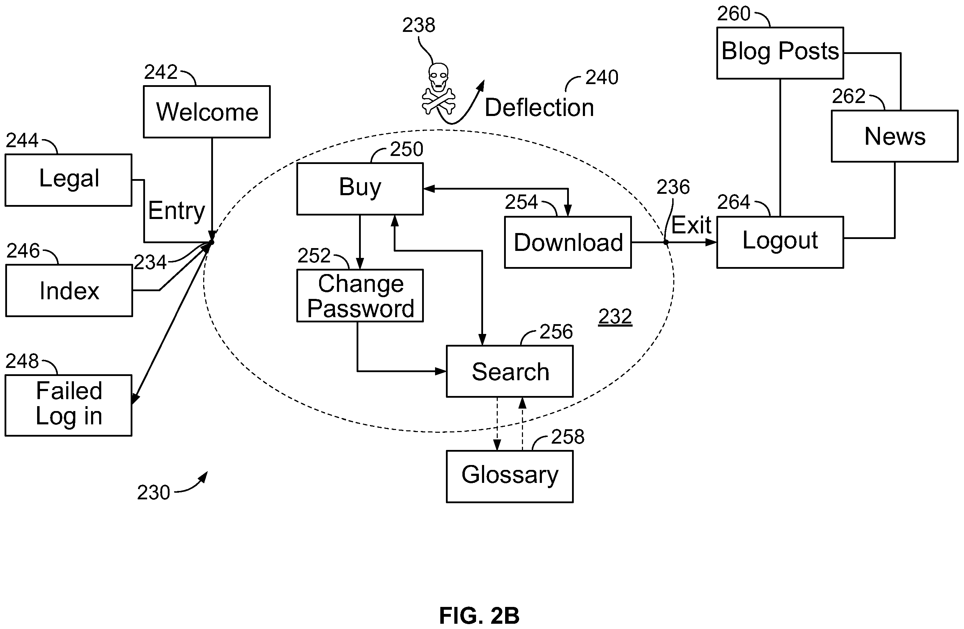

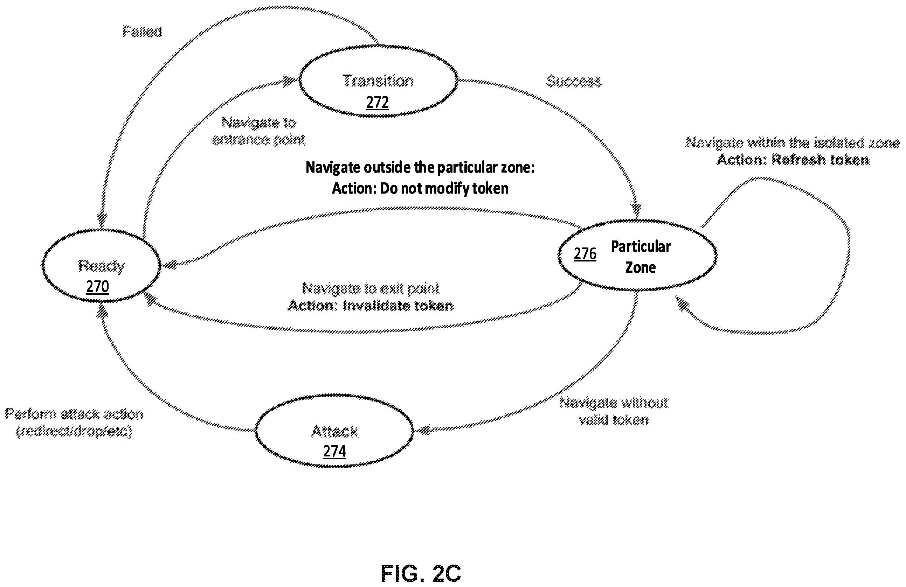

FIG. 2 shows a system for deploying updated security countermeasure packages. In general, the system 200 includes example components for serving web content or other resources with security countermeasures applied to it, and for continuously monitoring the effectiveness of those countermeasures, and then updating parameters for the particular countermeasures or rolling out new countermeasures and combinations of countermeasures, so as to maintain a high effectiveness level of the countermeasures against malware that may be executing on client devices that are served the content.

The system centers around a web server 202 that serves content through a security intermediary 204 over a network that includes the Internet, to a plurality of different client devices 208, 210. The Web server 202 may take a variety of forms, including a rack-based server system that includes a plurality of servers that are dedicated to serving a particular web site, a leased portion of a virtual server that is shared with other content providers, and other appropriate forms.

The security intermediary 204 may be a physical box or a virtual service, and may be located logically (and physically) between the web server 202 and the Internet so as to intercept served content and submitted requests, for purposes of transcoding the served content and potentially reverse transcoding the received requests. Additional security intermediaries 204 may be located on the client-side of the Internet (e.g., operated by ISPs, by corporate IT groups, or located in in-home Internet routers/gateways), and the transcoding they provide may take similar forms and be stacked on top of the transcoding provided by security intermediary 204, as they can act in a "layered" manner in which each layer need not be concerned with the transformations applied at another layer, as long as each layer adequately reverses its transformations so as to be effectively invisible to the other layers.

**The** clients 208, 210 that receive and execute the served content can take a variety of forms and present the content via various programs such as in web browsers. For example, client 208 is in the form of a smartphone computer or tablet computer, while client 210 is in the form of a desktop computer system.

The action of the security intermediary in transcoding content can be directed by local analysis system 207, global analysis system 209, or a combination of the two. The analyses systems obtain content from the web server 202, parse the content, and determine transformations and additions that may be made to the content in order to make it more secure against malware. In some situations, the analysis systems 207, 209 may initially determine whether particular content needs transformation at all, such as determining that a particular page has no interactive features, and simply presents basic text and graphics. The systems 207, 209 may then, for content determined to need transformation (e.g., login pages and commercial transaction pages, among others), identify the type of activity being performed by the content, and select one or more candidate security countermeasures that are directed to such types of content. For example, where a page includes a form to receive confidential information from a user, countermeasures designed to mask user input to forms may be selected and implemented. In addition, where a page is in a zone that may require higher security, a persistent token may be generated and assigned when the user enters the zone, and may be checked for all pages the user attempts to access in that zone.

In certain implementations, the local analysis system may be particularly adept at analyzing provided code and selecting appropriate countermeasures, and generating transformation maps, or templates, along with other structures needed to implement electronic countermeasures with the code. The global analysis system 209 may be operated by a central system, such as a central administrator for a large organization that serves many web pages and perhaps many web sites, or by a company that provides security services to many organizations. Such a global system may have access to a broad range of data that shows the effect of various countermeasures or types of countermeasures on various types of web pages and other served resources, and may compare content submitted to it by the security intermediary 204 to other content that has been protected by security countermeasures before so as to find matches in content types vis-a-vis the effectiveness of those countermeasures in protecting the types of content. Also, the global analysis system 209 may select countermeasures based on the environment into which certain content is being served, e.g., because the system 209 knows that a certain type of malware is currently active in a geographic region (e.g., as determined by client IP address) into which the content is being served, it may select countermeasures directed to that malware, even if the particular company serving the content has not yet served content into the region (because the global analysis system 209 may obtain data independent of that particular company).

Rules for applying particular countermeasures and parameters for those countermeasures may be stored in a countermeasure library 205. For example, each countermeasure may be identified by a countermeasure identification number which one of the analysis systems 207, 209 may provide to the security intermediary upon analyzing content, and the security intermediary 204 may pass such identification number to the countermeasure library 205 to obtain the information needed in order to apply the particular countermeasure or countermeasures. In certain embodiments, the countermeasure library may be hosted at least in part by a central service provide and may be accessed through the Internet by devices operated by various customers of such a service provider. Such an approach may permit for faster and more complex updating of countermeasures to reflect current malware activity, and to permit complex analysis across multiple such customers.

Particular operations performed by the system 200 for a first selection of countermeasures for content, and for subsequent selections, are shown by boxes located below the system 200. The first row of boxes indicate operations for the first countermeasure selection, and the second row (denoted "1 ... n") shows operations for that and subsequent selections of countermeasures.

Box 212 shows the system 200 receiving new content, such as by the web server 202 passing content to security intermediary 204 to be served in response to a request from one of the clients 208, 210. At box 214, the system analyzes and templates the content. Such analysis may include determining which countermeasures should be applied, and then generating a template that indicates locations in the content where changes need to be made in order to deploy the countermeasures, and the sorts of changes that need to be made at those locations. At box 216, the relevant countermeasures and instrumentation code to be added to the web code are selected and applied to the code served by the web server 202. Such application can result in the formation of the templates for the code, and for other structures needed to deliver each serving of the code, where particular servings of code can differ from other servings despite the code being supplied by the web server system 202 being the same for such different servings.

**At** box 218, the code is delivered polymorphically. In particular, the template(s) generated for the analysis can be filled out specifically for a certain serving of the code that differs from other servings of the same code, such as by replacing a certain input string of characters in the original code with output strings that change for different servings of the code, where the particular value of the string does not affect the manner in which the content presents to a user at a client device 208, 210.

Starting in the second row, which moves from right to left, results of the applied countermeasures are obtained and analyzed at box 220. For example, instrumentation code executing on clients that have been served the countermeasured code may report on the success of the code to block attempted malware efforts, and the extent to which such clients have been compromised despite the presence of the countermeasures. Also, such code may report on the prevalence of malware on the clients, where effective countermeasures may cause malware to disappear or go inactive in a cohort of clients, as the fraudsters move on to easier targets and abandon their efforts to exploit content from a particular web server 202. Similarly, activity of malware can be detected at a server system that receives submissions from particular clients that have been served code with countermeasures applied to it, such as by analyzing arguments provided in follow-up HTTP requests from such clients.

**At** box 222, a new test countermeasure or countermeasures may be selected, and may be rolled out in an internal serving environment or by serving a subset of the requests with the new countermeasure(s). The new countermeasure(s) may then be measured against absolute parameters and relative to the old/existing countermeasures, so as to determine whether a change to using the new countermeasure(s) may be beneficial. In this instance, the new countermeasure is determined to be superior and a switch is to be made, so that the template and other information for creating transformations for the new countermeasures are cached at box 224. The code is then served with polymorphic transformations using those new countermeasures (box 226), and the new countermeasures are measured against potential replacement countermeasures as time goes on. The process then cycles through this process of selecting new countermeasures and continually determining their effectiveness, so that they may be replaced if their effectiveness is determined to be unsatisfactory.

Though the switching of countermeasures here is discussed as occurring for particular resources over time, the selection and updating of countermeasures may occur according to dimensions other than or in addition to the time dimension. For example, certain types of pages may be grouped by being flagged by a developer (e.g., with a certain mark-up element or the like), and those pages may be treated specially and have different or additional countermeasures applied to them as compared to ordinary pages, such as by requiring the provision of a persistent security token from a client in order to receive resources for such a page, which is described next.

FIG. 2B shows schematically a process and system 230 for a persistent token security countermeasure. In general, this countermeasure may be selected as a single countermeasure, or one of multiple countermeasures, to be applied for content that is served, such as from a web server system. As with many other countermeasures, the persistent token countermeasure discussed here may be implemented by hardware components that are separate from a web server system and that sit between the web server system and the Internet to intercept communications to and from the web server system. In addition, the countermeasure may be combined with other countermeasures, including countermeasures that serve resources polymorphically and countermeasures that otherwise recode content when it is served so as to prevent malware from exploiting the content.

In the figure, the concept being forwarded by the countermeasure centers around the creation of an particular zone 232 for a web site or other group of resources with which users may interact over the Internet. The resources inside the zone 232 are resources that an operator of a web site has determined need to be secure because they involve some level of sensitive transactions. In this example, those resources are shown as a buy page 250 on which visitors to a web site may enter information to buy a product or service (e.g., such as credit card information), a download page 254 from which user may institute a download of a binary or other type of resource (e.g., an application the user has purchased form an on-line store), a change password page 252 that a user may employ to enter a new password and/or other credentials to be used in accessing sensitive areas of the site, and a search page 256 to which a user may enter a query and from which a user may receive search results. The search page 256 may be in the zone 232 and need protection because an unprotected version of that page may permit an illicit user to obtain a mass download of information about a site that the user may then employ to break into protected areas of the site. Thus, in this example, pages in the zone 232 are pages that a developer of the web site determined were in need of higher security treatment than pages outside the zone 232. In certain implementations, there may be additional areas, where multiple areas are each protected using a different persistent token, and perhaps one or more areas that require multiple of the persistent tokens discussed here.

Other resources fall outside the area 232, generally because they are not thought to need the protection and attendant overhead of the other resources inside the area 232. For example, welcome 242, legal 244, and index 246 pages of a site typically have just static content, or very limited amounts of interactivity, whose exploitation would not give an illicit party much information or access to a site. Similarly, a failed log in page 248 simply informs an unqualified user that they could not access protected or isolated resources. In like manner, pages for blog posts 260 and news 262 from a site may have heavy traffic and low sensitivity, so that avoiding having to provide extra security overhead for them may be favorable in terms of computing load, without much added risk. Finally, a logout page 264 shows the action of a user moving out of the isolation area 232.

Certain pages may be visited frequently from the area 232, even though they ae outside the area 232, and users may then return immediately to the area 232 after such visits. In this example, glossary page 258 serves as such a resource. The existence of a page being in or out of the area 232 may be represented in various manners, such as by an element in HTML or other code for a particular page, by storing a list or table by a web server system or security system that correlates URLs for each page to a status of that page with respect to being in the area 232 or not, or in other appropriate manners.

An entry point 234 and an exit point 236 represent changes in state for the system. Specifically, when a user enters the area 232 by requesting resources (e.g., via HTTP request that identifies a URL inside the isolation area) previously determined to be in the area 232 (e.g., by a programmer who may specially code the pages, or who may identify particular URLs as being inside the area, thus causing an automatic system to recode or supplement them with code for the relevant functionality discussed here), their device may enter a secure state with respect to the resources. This may occur by the security server system (which operates with the web server system that serves the resources) generating a persistent token that is then saved and accessed from the client device that the user is employing (e.g., as a cookie or other similar object). As long as the user stays in the area 232-i.e., by subsequently requesting other resources in that area 232-the persistent token will be kept alive and checked by the security system before each of the resources requested by the user's client device from the area 232 will be served. In this manner, the persistent token will create a form of a browsing session within a session-where the broader session is a familiar general session that can be returned to when the user leaves the area 232, and the narrower session is a special secure session that operates when the user is in the area 232.

In operation then, when a user attempts to enter the area 232, its client device will present an HTTP or similar request that includes a URL of a resource. A security server system may intercept such a request and may determine that the relevant resource is supposed to be provided with security. It may then force a credentialing process, e.g., by asking the user for a username and password. It may then generate a session token that it will subsequently maintain in a persistent manner (e.g., on the client device). It will also forward the request to the web server system that it serves so that the web server system may fulfill the request by providing resources responsive to the request. Such an action by the web server system may also include the web server system generating (if the user is a first time user in a set time period) or identifying its own session ID (if the user is a recent new user), separate from the token generated by the security service-e.g., to maintain continuity in the session as a user moves around a site, such as to provide personalized pages. That session ID may typically be passed back and forth in clear text in a URL.

By example, consider the website "customer.com," which requires its users to first go to a login page, provide the right credentials, and then directs the users to a welcome page. This welcome page has a URL like the following: http://customer.com/welcome?session=12345. The session ID "12345" is generated as part of the successful authentication. However, there is no other identification mechanism in the transactions after the authentication. There is no cookie containing the encrypted information about the session. An attacker could thus open the same URL in a different browser running on a different machine, and would get the same welcome page, effectively bypassing the authentication process. The attacker could continue to access the web application using the session ID, and perform malicious operations such as changing the password, downloading documents, and accessing personal information, as if it were the victim. The attacker could perform these malicious actions on behalf of the victim, for the duration of the session lifetime. Alternatively, a nefarious party could try to predict the session ID generation pattern, and then select a session ID likely to be active and test such ID, repeating the process until an ID works.

With the example shown in the figure, when the user enters the isolation area and upon the user being authenticated, the intermediate security service deployed between the web server system and the Internet can inject (e.g., into the header information) a persistent session token such as in the form of an HTTP session cookie, which supplement or replace header information provided by the web server system. Each entrance point to the area 232 may be an authentication page having a particular URL, and may in some circumstances request verification information from the user (e.g., userlD and password). The presence and validity of the persistent token will then be enforced for all requests subsequently made within the area 232. For example if the user moves to buy page 250, the security from the token may be enforced, and if the user subsequently moves to the download page 254, the token will again be checked by the security system to determine if the submitted token is legitimate, and access restrictions will be enforced based on that determination. If the security system determines that a submitted token is invalid, it will consider the request an attack and perform appropriate actions.

When the user exits the area 232 by submitting a request for a resource outside the area 232 (i.e., the user leaves the area 232) that is managed by the security system (so that the security system receives the request for the resource and can determine from its records that the resource is outside the area 232), the security intermediary system will recognize the presence of a URL for a resource outside the area 232 and will delete the persistent session token. The effects of removing the session token include requiring a user to go through an entry point in order to next access a resource inside the area 232, which may require the user to manually provide credential information. Also, removal of the token may allow the system to avoid unnecessary timeout messages.

If the user re-enters the area 232 by requesting a resource inside the area 232, a new persistent token will be created and maintained (where the creation of the new token may or may not require re-authentication by the user, depending on the implementation). In certain situations, the security system may consider certain resources outside the isolation area 252, such as glossary 258, to be temporary resources because it has been determined that users frequently request them and then request resources inside the isolation area 252. Requests of such temporary resources may not cause the persistent security token to be erased, and instead may result in the security system maintaining the token for the sake of efficiency.

If the user leaves the area 232 other than through an exit point (e.g., the user submits an HTTP request to a URL that does not route through the security system, such as a URL for a domain different than the web site that includes the area 232), the persistent token will not be erased or updated. If the user subsequently stays outside the area 232 for a sufficient time, the persistent session token may expire, similar to how session tokens for typical web applications often expire after a determined time period of non-use.

The persistent session token in these examples may include one or more of the following types of data or equivalent data. First, the token may include a timestamp that represents a date/time when the token was generated. The time stamp may be used to perform timeout operations. The token may also include an association with the session ID value that is specified in a URL, where the session token is generated based on the session ID value. For example, a process, in generating a session token, may concatenate the session ID with a fixed or variable prefix or suffix-e.g., if the session ID is 12345, the session token may be 000001234511111. The session token may also include a digital signature for the information just mentioned, such as using SHA256 with RDA. Moreover, the token may include an index of the key that was used to sign the data, so that the security device can use the key upon receiving a request, to validate the signature that is received, and need not separately keep track on the server side of particular client device parameters.

The intermediate security system may generate the security token and may make the security token invisible to the underlying web server system that serves the ultimate resources requested by users. For example, when a client device makes a request (e.g., an HTTP request) that includes the token, the security system may identify the token in the request, interpret it (e.g., to determine that it is legitimate and the user should have access to the underlying resources provided by the web server system), recode the request so that the token is no longer present in it, and forward the recoded request to the web server system. As one example, an HTTP cookie carrying the token may be set with HttpOnly and Secure flags. Such use of a cookie may be implemented so that it does not interfere with the use of other cookies that the web server system may deploy and analyze as part of its session.

FIG. 2C is a state diagram of a security system that uses a persistent security token. In general, the figure shows different states that components of an intermediary security server system, which is associated with a particular client device of a user, may enter in response to navigation of a user in and out of a security area like area 232 in FIG. 2B.

As shown at item 270, the system may initially be in a "steady" state for the particular user and client device, where the system is monitoring requests that are submitted to a web server system that it (the security system) protects, for requests that point to protected resources. As shown by the arrow to item 272, when the user navigates to an entrance point, e.g., by selecting a hyperlink aimed to a page inside a particular defined area (e.g., area 232 in FIG. 2B), the system may enter a "transition" state, whereby the user and/or user device may be asked for credentials such as a UserlD and password. If the authentication fails, the user is not allowed to receive the requested resources and the system returns to the "steady" state. If the authentication succeeds, the system changes to a state in which the user is in the "controlled zone," as indicated by item 276. In such a situation, and as shown by various arrows emanating from the item 276, the user may navigate to other resources (e.g., web pages) within the controlled zone and may thus stay in that same state. The user may also navigate outside the controlled zone (or security area) without going through a designated exit point, such as by selecting a different web site and domain from a "favorites" menu of their web browser. In such an example, the system is not monitoring for such outside activity, so it will not know that the user has navigated away (other than perhaps by way of a timer expiring when the user does not request any additional resources in the controlled zone, so that such navigation away from the controlled zone may be inferred).

Item 274 shows the system entering an attack state. Such a state may be entered when a resource inside the controlled zone is requested, but the request does not include a valid security token-such as by the request including no security token, an expired security token, or a wholly invalid security token (one that has never been generated and assigned to a client by the system and/or has a format that differs from the format of security tokens generated by the system). The same or a different response may be performed for each such situation (and may lead back to entering a ready state per item 270). For example, if the token is expired (and especially if it is recently expired), the system may require new user authentication, and may generate and assign a new security token to the client device, under the assumption that the request was not malicious but was instead merely stale. Where the token is one that has never been generated or is one that does not match proper format, the system may more readily presume that the submission was by a malicious party trying to compromise the system. In such a situation, the system may log the event and associated meta data (e.g., an IP address of the device, a device ID for the device, etc.) for later analysis-e.g., by a central system that receives such logged data from multiple security devices at multiple different organizations and uses it to characterize and identify new threats. The system may also refuse to serve the requested resources, and may in some situations serve resources that the client device will see as being the requested resources but that are not. The served resources may be accompanied by instrumentation code that operates on the particular client device to analyze how the malware on the device is operated. For example, if the requested resources were a page for performing a financial transaction at a retail or banking site, the code may operate to see how the malware (which thinks it received a real transaction page, but instead received a page that permits full interaction, but whose submission will not result in the transaction occurring) interacts with the resources, and may provide information to the malware and/or fraudster operating the malware to gain data that will help in the identification and capture of the fraudster and/or in confusing the malware and fraudster so as to make future exploitation by them more difficult.

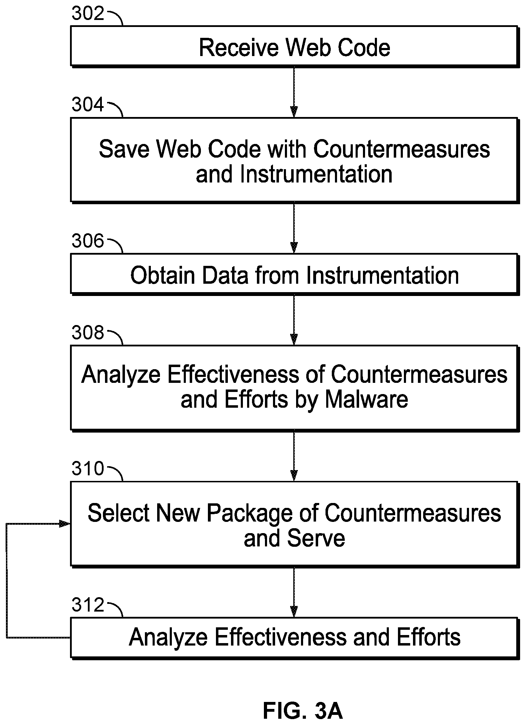

FIG. 3A is a flow chart of a process for serving transcoded content in a continually-updated manner. In general, the method involves continuously monitoring performance of security countermeasures and using information from such countermeasures to determine when to switch to new countermeasures and also which new countermeasures to select, from a list of available countermeasures for the system. Multiple separate such changing countermeasure packages may also be maintained and updated essentially simultaneously, such as for different group of web pages for a web site (e.g., sensitive pages may receive one group of ever-changing packages, while less sensitive pages may have a different group of ever-changing packages applied to it).

The process begins at box 302, where web code is received. Such action may occur for example, by a security server system being located logically between an originating web server system and the Internet. The security server system may intercept content that is served form the web server system, and may also intercept requests from clients made in response to the content that is served. Where the system transcodes content before serving it, requests form clients that are generated off that served transcoded content may need to be reverse transcoded using a key that matches what was used when serving the content.

At box 304, the web code is served with countermeasures and instrumentation code applied to the web code. The instrumentation code may include separate files (separate from the web code and from the other instrumentation code) for executable code that is integrated with the web code, and that executes on the client device to monitor actions happening on the client device, such as information that characterizes the device, information that characterizes interaction between a user of the device and the served content, and information that characterizes interaction between third-party software and the served code. The particular countermeasures that are applied to the code before it is forwarded by the security system may differ over time and across types of resources or content, such as by different particular groups of pages (tracked by the security system using their URLs) having different particular groups of countermeasures applied to them, and the particular groups of countermeasures being updated over time, in different ways for the different groups of pages (e.g., the system may be set so that it determines to update countermeasures for sensitive pages more frequently than countermeasures for less sensitive pages, under the assumption that more aggressive action is appropriate for pages that are most likely to be under attack).

At box 306, data is obtained from instrumentation code that was served with the web code. Such data may be received at the device that transformed the code, or at another device, such as part of a central server analysis system for a security service organization. The data may indicate the presence of certain malware on a device, or devices, and the ability of that malware to take advantage of the device(s). The data may be analyzed before it is sent and after it is sent, or may be broadcast back to the security system from a client in a raw form, where all analysis is performed by the server system. Data about the action of possible malware on a client may also be received from requests that the client submits, and may be detected at a security system that intercepts such requests. For example, a request for certain resources that have been recoded or hidden by the security system may indicate that the client device is playing from an old deck, so to speak, and thus that the client device is controlled by malware. The security server system may also use provided data to identify a level of effectiveness of the security countermeasure applied to the code with respect to the particular malware, either for a particular serving of code or across multiple servings of code. For example, a countermeasures may be deemed 50% effective if it blocks one half of the attempts made to exploit code on a particular computer, or if it successfully blocks all attempts on one half of the served computers but allows exploitation of the code on the other half.

At box 308, the system analyzes the effectiveness of various countermeasures and efforts by malware. For example, reports like that just discussed may be received over time from numerous different client devices that were provided with numerous different versions of security countermeasures, whether as single countermeasures or combination of multiple countermeasures. The system may thus identify the effectiveness of countermeasures for a particular situation, such as for serving of a particular web page or type of web page, such as a simple login page. The system may store information identifying the relative effectiveness of each countermeasure in combination with countermeasures in various situations. For countermeasures that have not yet gone live in a real-world situation, internal testing against hypothetical malware attacks may be performed, and such countermeasures may receive scores for ranking relative to each other based on those test attacks.

At box 310, the system selects a new package of countermeasures to be applied to the particular type of code or particular web page. For example, if an attack is determined to be of a type X, a system may identify which countermeasures were particularly effective in prior attacks of a type X (e.g., using numeric scores assigned to each countermeasure, either in total or specific to the particular type of attack-e.g., one countermeasure may be deemed effective at a 60 level generally, and effective at an 85 level (out of 100) against countermeasures of type X), whether in real-world applications or in internal testing, or by a developer of the countermeasure having identified the type of situations (e.g., via the types of threats faced) in which it is designed to be effective. One or more of those countermeasures may then be assigned as the countermeasure to be applied.

At box 312, effectiveness of the countermeasures that have been served, and the efforts applied by malware, may be analyzed. For example, a system may identify whether the malware is present, and the degree to which it has been successful or failed in the face of particular countermeasures. Such operation of the malware may be characterized in a variety of ways, including by identifying the particular class of malware, and assigning it a normalized numeric score (e.g., between 0 and 1, or between 1 and 100) for the effectiveness of the countermeasure package or the ineffectiveness of the countermeasure package. For example, malware that has succeeded in breaching systems frequently may be assigned a score near 1 (on a 0 to 1 scale) or 100 (on a 1 to 100 scale).

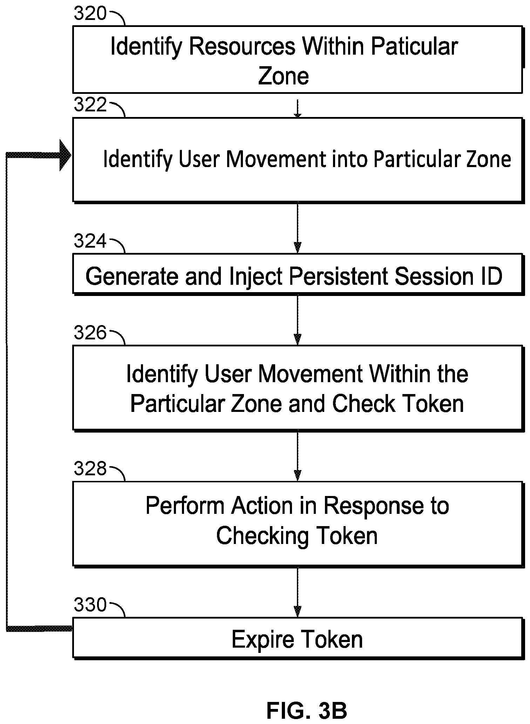

FIG. 3B is a flowchart of a process for using a persistent token to maintain web security. In general, the process may be performed by a security service, such as operated by a security intermediary server system that intercepts communications to and from a web server system, as described in more detail above and below. The particular security measures described here may also be applied as the only countermeasure that such a system applies or may be combined with other such countermeasures, in manners like those discussed above and below. In addition, the token may be required to access to certain resources associated with a web site or other served content, and not to others-such as to sensitive pages but not less sensitive pages..

The process starts at box 320, where a security system identifies resources that are inside a particular zone. Such identification may occur, for example, by accessing a list of URLs maintained by a developer who developed the system, such as by the developer indicating to a code management system which pages should be considered to require secure treatment. The isolated resources can also be determined after-the-fact, such as by a security administrator operating an application that analyzes resources to identify links between the resources, and resources that have indications of needing security, such as by being credentialing pages or being pointed to by credentialing pages (e.g., pages that request and process a user ID and password).

At box 322, the process identifies user movement into the particular zone. Such action may occur by a security intermediary intercepting HTTP requests submitted to a web server system and, among other things, checking the requests against a list of URLs that have been previously designated as being inside the particular zone.

At box 324, the process generates and injects a persistent session ID to provide security for the system. The generation and injection can occur using mechanisms like those discussed in relation to FIGs. 2B and 2C above. For example, a token may be generated and applied in a cookie on a client device, where the token includes a timestamp, an association with a section ID value specified in a URL, a digital signature, and an index for a key used to sign the data.

At box 326, the process identifies movement within the particular zone and checks the token. In particular, the cookie for the token may be set up so that the token is submitted with subsequent resource requests that the client device makes to the web server system. When the security intermediary receives the request, it may check the URL for the requested resource to determine that such resource is in the particular zone, and may then check the token to determine whether the request is legitimate and the user should be served the resource (box 328). If so, the security intermediary can pass a recoded version of the request to the web server system, obtain the resources back from the web server system, and serve them to the client device (perhaps after performing recoding that adds additional security countermeasures to them). If not, the security intermediary may log the request as an attack and deal appropriately with the attacker, such as by refusing access explicitly, or by seeking additional information from the attacker that may subsequently be used to better characterize or identify the attacker as a means for preventing future attacks from the same or similar organization.

At box 330, the token expires. The token can expire as a result of timing out or as a result of a user passing through an exit point for the particular zone, and having the security system revoke the token in response. The system then re-enters a ready state, like that shown by item 270 in FIG. 2C, and monitors for further entry into the particular zone.

While this process is described for a single client device at a particular point in time, a full security system will typically perform such operations essentially in parallel for thousands of client devices, and perhaps also for multiple such zones that are protected by different persistent tokens and have different groups of countermeasures applied to them. Thus, the steps here may be iterative and may also be overlaid in full or in part with the same or similar steps being carried out for a number of other client devices that are trying to access resources that are the responsibility of a particular security server system, and other resources in other zones.

As a particular example, consider an intermediate security device that protects an existing web site for www.example.com from session ID attacks. The session cookie name for injection may be defined as "secure-session-token." The root folder for the domain may be defined as

```
      <cookie>
              <name>secure-session-token</name>
              <domain>www.example.com</domain>
              <path>/</path>
      </cookie>
```

The persistent session token timeout value may be defined in seconds: "<timeout>600</timeout>." The way to retrieve session ID information from a URL may be defined as" <session-id-regex>\b[0-9]{12,16}}\b</session-id-regex>." Note that this needs to match the way the web application server generates session ID and attaches it to the URL. In this example, the server will generate decimal session IDs of 12 to 16 digits. The security device will retrieve the number accordingly from URL arguments.

The entrance points to the particular zone, including the criteria to determine whether a server response represents a successful or failed login, may be defined such as by two entrance points:

```
      <entrance>
       <! - - Entrance point 1: login page - - >
       <match-condition>
              <http-request uri=".*login.*" host="(.*\.)?example.com" />
              <http-response>
                     <status>200</status>
                     <body>Welc.ome.*</body>
              </http-response>
      </match-condition>
      <! - - Entrance point 2: product or shopping cart page - - >
       <match-condition>
         <http-request uri=".*V(cart|product)V.*" host="(.*\.)?example.com"
         />
         <http-response>
                       <status>302</status>
                 <body>Retrieving user information: please wait</body>
         </http-response>
      </match-condition>
      </entrance>
```

Similarly, the exit points from the isolation zone may be defined, here a single exit point:

```
 <exit>
           <! - - Logout page - ->
           <match-condition>
                 <http-request uri=".*logout.*" host="(.*\.)?example.com" />
           </match-condition>
           </exit>
```

And the web resources in the particular zone may be defined, such as any pages with a session ID parameter being considered to be in the particular zone:

```
 <session>
     <match-condition>
      <http-request uri=".*" host="(.*\.)?example.com" request-
      method="GET">
                   <params>
                             <param enable-detection="true">
                                     <name>sessionld</name>
                                     <value>\b[0-9]{12,16}}\b</value>
                             </param>
                   </params>
        </http-request>
     </match-condition>
     </session>
```

This example then shows a simple approach to defining appropriate items for purposes of generating and managing persistent session tokens for providing additional security to a group of resources defined by a particular area.

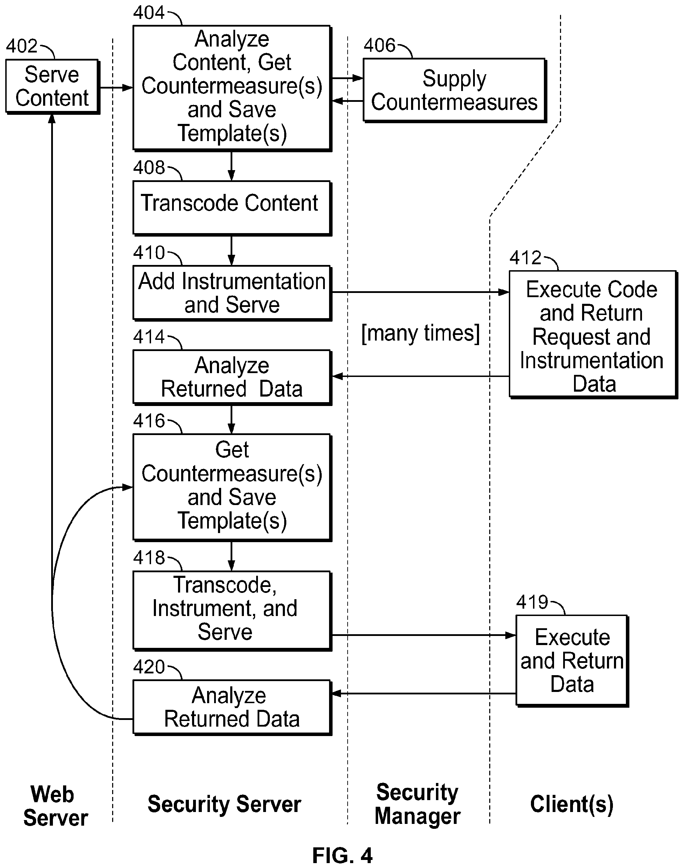

FIG. 4 is a swim lane diagram of a process for serving transcoded content in a continually-updated manner. In general, the process is similar to that shown in FIG. 3A, though with more detail provided for which example operations may be performed by particular components in a system.

The process begins at box 402, where content is served by a web server system. The content may take a variety of forms, including relatively benign content that does not need security applied to it, or relatively sensitive content such as login pages and transaction pages for retail web sites.

At box 404, a security server system receives the content from the web server system and analyzes it. Such analysis may involve identifying transformations that may be applied to the content and then determining countermeasures that be may applied to make such transformations. The analysis may result in a map or template being formed, which identifies particular changes to be made to the code when it is served and locations at which each such change is to occur. For example, one type of countermeasure may change variable names from their original names to a random string of characters that is then changed each time the content is served. A similar countermeasure may perform the same process for function names. Another countermeasure may inject JavaScript or other executable code into the served content, where the JavaScript can do nothing other than distract malware, can perform operations that distract malware (including by sending fake data to a server system and receiving fake data in return). The process here may identify variable names and their locations (including by linking them across the multiple locations each may occur in the code) and form a template from such analysis, and then each time the content is requested by a client, the name at the indexed location may be replaced with a newly (request-time) selected string of characters.

At box 406, a security manager supplies appropriate countermeasures to the security server system. The countermeasures may be selected by the security manager to be customized for the particular type of content, such as countermeasures designed to thwart malware exploitation of login pages when the relevant content includes a login component. The analysis previously shown as occurring on the security server system may also be performed in whole or in part by the security manager before selecting the suggested countermeasures. Such selection may occur manually by a human operator at the security manager selecting icons (displayed on a screen of the operator's computer system) associated with each of a plurality of countermeasures after reviewing the web page to be served, automatically by a security manager system, or a combination of both, with, for example, the security manager system parsing the code and suggesting a number of possible countermeasures, and the operator selecting one or more of those countermeasures. The security manager or security server may then run the particular countermeasures against the particular code so as to generate a map for transcoding the code, e.g., by identifying changes to be made in the code each time it is served and locations where such changes are to occur.

At box 408, the security server transcodes the code and adds instrumentation code (box 410) to the content. The transcoding may, for example, replace the names of functions or variables with transcoded names, replace executable code with transcoded code that differs but performs the same functions, and other changes to the content that does not alter a user's experience with the content, but that can be applied to interfere with operation of malware, such as by being harder to analyze, or by varying in slight ways each time the content is served so as to supply a moving target that is harder for the malware to analyze or otherwise interact with.

Other sorts of countermeasures may be applied also, such as by interfering with malware attempts to determine what has been entered into web forms, and similar data entry obfuscation. Also, certain malware attacks attempt to locate items on a display by their x,y coordinates, especially when textual data is included in images in the served content. Such malware operation may be interfered with by stretching or bending the content slightly in the image, removing pixels from the display of the content, removing lines of pixels from the display of the content, or other mechanisms that interfere with a machine's attempt to determine what is displayed in an image but that do not interfere with a human user's ability to see what is displayed.

The particular clients may then, as shown by box 412, execute the code and return requests and instrumentation data generated by the execution of the instrumentation code. As shown, such transactions may occur multiple times for a particular serving of the code, and also over many different servings of the code that employ the particular countermeasures in generating transcoded code and instrumentation code. For example, a user of a client device may submit multiple requests that originate from a web page, including one request for each keystroke entered into forms on the page, or for submission of an entire form (e.g., by clicking on a "submit" button). Also, many different client devices may request and execute the same page over time, and the page content may be served by transcoding it in a different manner each different time it is served to a different request, though with the effect being the same from the viewpoint of the users at web browsers on the client devices.

As part of such processes, the security server system may analyze the received data (box 414), such as by determining whether the received requests from client devices include data that indicate that a particular client device is infected by malware, and also receiving data about anomalous activities on the client device. In some instances, a central system can also or alternatively receive and analyze such data, including by analyzing data received across many different web pages of a similar type served by many different organizations.

At box 416, the system (e.g., via security server system or security manager system) may determine from the received data that the applied countermeasures need to be changed. For example, the predetermined maximum time threshold for expiration of a persistent token may be determined to have been met, or some other measure or combination of measures has been triggered, such as a combination of the effectiveness of the countermeasures and the time they have been served meeting a predetermined level (more specifically, from the effectiveness falling and the time-served rising). Also, countermeasures may be changed when the content is updated, such as by the Web server publishing an updated version of a web page. The system then gets new countermeasures, applies them against content, and generates a new map or template for the content with the new countermeasure or countermeasures. The updating of countermeasures and countermeasure selection can occur for all or a sub-set of the served resources. For example, benign resources can be served without countermeasures. Resources that need some security may be served with another set of countermeasures. And resources that need higher security can be served with another set of countermeasures. The particular mix of countermeasures applied to the different groups of resources may be changed independently of the changes applied to countermeasures for other groups of resources.

At box 418, the security server system then begins transcoding, instrumenting, and serving the content according to the new set of countermeasures. The client devices then execute the served content and return data from user and computer interaction with the content (box 419), and the system analyzes the returned data as before (box 420). As shown by the pair of arrows to the left of box 420, the process may repeat continuously, with additional instances of the code being served to different requesting clients, with new countermeasures being identified and deployed and then served with the content, and with new content (e.g., an updated version of a web page) being received and analyzed, and having countermeasures selected for it and applied to it.

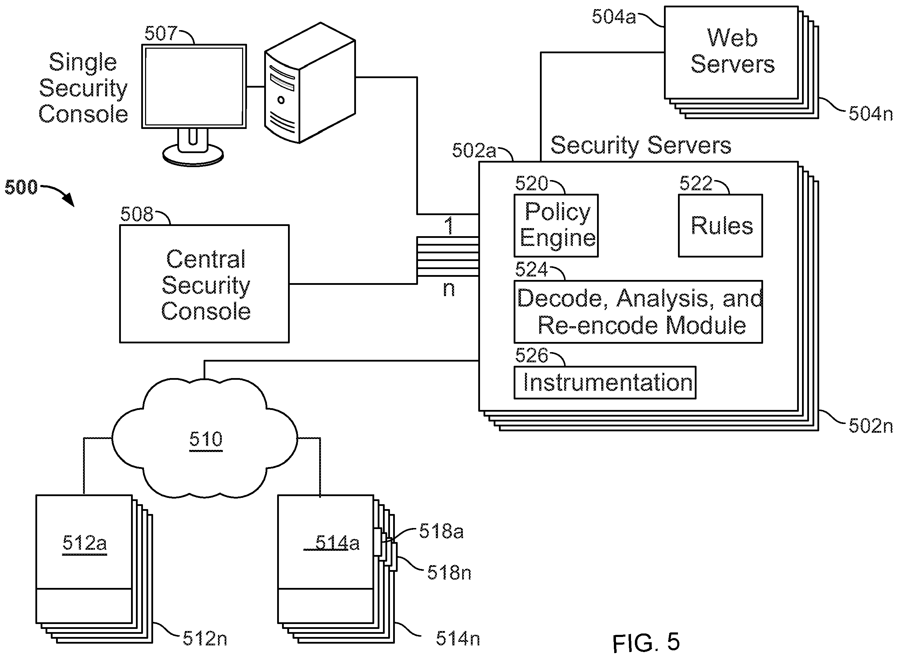

FIG. 5 shows a system 500 for serving polymorphic and instrumented code. Generally, polymorphic code is code that is changed in different manners for different servings of the code in manners that do not affect the manner in which the executed code is perceived by users, so as to create a moving target for malware that tries to determine how the code operates, but without changing the user experience. Instrumented code is code that is served, e.g., to a browser, with the main functional code and monitors how the functional code operates on a client device, and how other code may interact with the functional code and other activities on the client device.

The system 500 may be adapted to perform deflection and detection of malicious activity with respect to a web server system. Deflection may occur, for example, by the serving of polymorphic code, which interferes with the ability of malware to interact effectively with the code that is served. Detection may occur, for example, by adding instrumentation code (including injected code for a security service provider) that monitors activity of client devices that are served web code.

The system 500 in this example is a system that is operated by or for a large number of different businesses that serve web pages and other content over the internet, such as banks and retailers that have on-line presences (e.g., on-line stores, or on-line account management tools). The main server systems operated by those organizations or their agents are designated as web servers 504a-504n, and could include a broad array of web servers, content servers, database servers, financial servers, load balancers, and other necessary components (either as physical or virtual servers).

In this example, security server systems 502a to 502n may cause code from the web server system to be supplemented and altered. In one example of the supplementation, code may be provided, either by the web server system itself as part of the originally-served code, or by another mechanism after the code is initially served, such as by the security server systems 502a to 502n, where the supplementing code causes client devices to which the code is served to transmit data that characterizes the client devices and the use of the client devices in manners like those discussed in the many examples above. As also described below, other actions may be taken by the supplementing code, such as the code reporting actual malware activity or other anomalous activity at the client devices that can then be analyzed to determine whether the activity is malware activity.

The set of security server systems 502a to 502n is shown connected between the web servers 504a to 504n, and a network 510 such as the Internet. Although both extend to n in number, the actual number of sub-systems could vary. For example, certain of the customers could install two separate security server systems to serve all of their web server systems (which could be one or more), such as for redundancy purposes. The particular security server systems 502a to 502n may be matched to particular ones of the web server systems 504a to 504n, or they may be at separate sites, and all of the web servers for various different customers may be provided with services by a single common set of security servers 502a to 502n (e.g., when all of the server systems are at a single co-location facility so that bandwidth issues are minimized).

Each of the security server systems 502a to 502n may be arranged and programmed to carry out operations like those discussed above and below and other operations. For example, a policy engine 520 in each such security server system may evaluate HTTP requests from client computers (e.g., desktop, laptop, tablet, and smartphone computers) based on header and network information, and can set and store session information related to a relevant policy. The policy engine may be programmed to classify requests and correlate them to particular actions to be taken to code returned by the web server systems before such code is served back to a client computer. When such code returns, the policy information may be provided to a decode, analysis, and re-encode module, which matches the content to be delivered, across multiple content types (e.g., HTML, JavaScript, and CSS), to actions to be taken on the content (e.g., using XPATH within a DOM), such as substitutions, addition of content, and other actions that may be provided as extensions to the system. For example, the different types of content may be analyzed to determine naming that may extend across such different pieces of content (e.g., the name of a function or parameter), and such names may be changed in a way that differs each time the content is served, e.g., by replacing a named item with randomly-generated characters. Elements within the different types of content may also first be grouped as having a common effect on the operation of the code (e.g., if one element makes a call to another), and then may be re-encoded together in a common manner so that their inter-operation with each other will be consistent even after the re-encoding.

Both the analysis of content for determining which transformations to apply to the content, and the transformation of the content itself, may occur at the same time (after receiving a request for the content) or at different times. For example, the analysis may be triggered, not by a request for the content, but by a separate determination that the content newly exists or has been changed. Such a determination may be via a "push" from the web server system reporting that it has implemented new or updated content. The determination may also be a "pull" from the security servers 502a-502n, such as by the security servers 502a to 502n implementing a web crawler (not shown) to recursively search for new and changed content and to report such occurrences to the security servers 502a to 502n, and perhaps return the content itself and perhaps perform some processing on the content (e.g., indexing it or otherwise identifying common terms throughout the content, creating DOMs for it, etc.). The analysis to identify portions of the content that should be subjected to polymorphic modifications each time the content is served may then be performed according to the manner discussed above and below.

As noted above, certain of the analysis can be performed in advance. For example, partial analysis for generating countermeasures may be performed for purposes of templatization, so as to identify relevant elements in the content, and the locations in the content of elements that match each other (e.g., particular matched variable names). Then, when particular countermeasures are to be applied to the content, the templates may be used to more readily identify whether and to what extent certain countermeasures can be applied to the content (e.g., if the template shows no data entry tables, then data entry countermeasures will not do much for the content). Also, full countermeasures and groups of countermeasures may be worked out and defined in advance, so that they can be employed immediately when they are needed. For example, a "stack" of countermeasures may be maintained at any given time so that such countermeasures can be made available for selection when a system determines that a current package of countrermeasures should no longer be used.

A rules engine 522 may store analytical rules for performing such analysis and for re-encoding of the content. The rules engine 522 may be populated with rules developed through operator observation of particular content types, such as by operators of a system studying typical web pages that call JavaScript content and recognizing that a particular method is frequently used in a particular manner. Such observation may result in the rules engine 522 being programmed to identify the method and calls to the method so that they can all be grouped and re-encoded in a consistent and coordinated manner.

The decode, analysis, and re-encode module 524 encodes content being passed to client computers from a web server according to relevant policies and rules. The module 524 also reverse encodes requests from the client computers to the relevant web server or servers. For example, a web page may be served with a particular parameter, and may refer to JavaScript that references that same parameter. The decode, analysis, and re-encode module 524 may replace the name of that parameter, in each of the different types of content, with a randomly generated name, and each time the web page is served (or at least in varying sessions), the generated name may be different. When the name of the parameter is passed back to the web server, it may be re-encoded back to its original name so that this portion of the security process may occur seamlessly for the web server.

A key for the function that encodes and decodes such strings can be maintained by the security server system 502 along with an identifier for the particular client computer so that the system 502 may know which key or function to apply, and may otherwise maintain a state for the client computer and its session. A stateless approach may also be employed, whereby the system 502 encrypts the state and stores it in a cookie that is saved at the relevant client computer, or in a hidden field such as a field on a form that is being presented to a user and for which the input to the form is being obfuscated in a polymorphic manner. The client computer may then pass that cookie data back when it passes the information that needs to be decoded back to its original status. With the cookie data, the system 502 may use a private key to decrypt the state information and use that state information in real-time to decode the information from the client computer. Such a stateless implementation may create benefits such as less management overhead for the server system 502 (e.g., for tracking state, for storing state, and for performing clean-up of stored state information as sessions time out or otherwise end) and as a result, higher overall throughput.

The decode, analysis, and re-encode module 524 and the security server system 502 may be configured to modify web code differently each time it is served in a manner that is generally imperceptible to a user who interacts with such web code. For example, multiple different client computers may request a common web resource such as a web page or web application that a web server provides in response to the multiple requests in substantially the same manner. Thus, a common web page may be requested from a web server, and the web server may respond by serving the same or substantially identical HTML, CSS, JavaScript, images, and other web code or files to each of the clients in satisfaction of the requests. In some instances, particular portions of requested web resources may be common among multiple requests, while other portions may be client or session specific. The decode, analysis, and re-encode module 524 may be adapted to apply different modifications to each instance of a common web resource, or common portion of a web resource, such that the web code that it is ultimately delivered to the client computers in response to each request for the common web resource includes different modifications.

In certain implementations, the analysis can happen a single time for a plurality of servings of the code in different recoded instances. For example, the analysis may identify a particular function name and all of the locations it occurs throughout the relevant code, and may create a map to each such occurrence in the code. Subsequently, when the web content is called to be served, the map can be consulted and random strings may be inserted in a coordinated matter across the code, though the generation of a new name each time for the function name and the replacement of that name into the code, will require much less computing cost than would full re-analysis of the content. Also, when a page is to be served, it can be analyzed to determine which portions, if any, have changed since the last analysis, and subsequent analysis may be performed only on the portions of the code that have changed.

Even where different modifications are applied in responding to multiple requests for a common web resource, the security server system 502 can apply the modifications in a manner that does not substantially affect a way that the user interacts with the resource, regardless of the different transformations applied. For example, when two different client computers request a common web page, the security server system 502 applies different modifications to the web code corresponding to the web page in response to each request for the web page, but the modifications do not substantially affect a presentation of the web page between the two different client computers. The modifications can therefore be made largely transparent to users interacting with a common web resource so that the modifications do not cause a substantial difference in the way the resource is displayed or the way the user interacts with the resource on different client devices or in different sessions in which the resource is requested.

An instrumentation module 526 is programmed to add instrumentation code to the content that is served from a web server. The instrumentation code is code that is programmed to monitor the operation of other code that is served. For example, the instrumentation code may be programmed to identify when certain methods are called, when those methods have been identified as likely to be called by malicious software. When such actions are observed to occur by the instrumentation code, the instrumentation code may be programmed to send a communication to the security server reporting on the type of action that occurred and other metadata that is helpful in characterizing the activity. Such information can be used to help determine whether the action was malicious or benign.

The instrumentation code may also analyze the DOM on a client computer in predetermined manners that are likely to identify the presence of and operation of malicious software, and to report to the security servers 502 or a related system. For example, the instrumentation code may be programmed to characterize a portion of the DOM when a user takes a particular action, such as clicking on a particular on-page button, so as to identify a change in the DOM before and after the click (where the click is expected to cause a particular change to the DOM if there is benign code operating with respect to the click, as opposed to malicious code operating with respect to the click). Data that characterizes the DOM may also be hashed, either at the client computer or the server system 502, to produce a representation of the DOM (e.g., in the differences between part of the DOM before and after a defined action occurs) that is easy to compare against corresponding representations of DOMs from other client computers. Other techniques may also be used by the instrumentation code to generate a compact representation of the DOM or other structure expected to be affected by malicious code in an identifiable manner.

As noted, the content from web servers 504a to 504n, as encoded by decode, analysis, and re-encode module 524, may be rendered on web browsers of various client computers. Uninfected client computers 512a to 512n represent computers that do not have malicious code programmed to interfere with a particular site a user visits or to otherwise perform malicious activity. Infected client computers 514a-514n represent computers that do have malware or malicious code (e.g., 518a to 518n, respectively) programmed to interfere with a particular site a user visits or to otherwise perform malicious activity. In certain implementations, the client computers 512a to 512n, 514a to 514n may also store the encrypted cookies discussed above and pass such cookies back through the network 510. The client computers 512a to 512n, 514a to 514n will, once they obtain the served content, implement DOMs for managing the displayed web pages, and instrumentation code may monitor the respective DOMs as discussed above. Reports of illogical activity (e.g., software on the client device calling a method that does not exist in the downloaded and rendered content) can then be reported back to the server system.

The reports from the instrumentation code may be analyzed and processed in various manners in order to determine how to respond to particular abnormal events, and to track down malicious code via analysis of multiple different similar interactions across different client computers 512a to 512n, 514a to 514n. For small-scale analysis, each web site operator may be provided with a single security console 507 that provides analytical tools for a single site or group of sites. For example, the console 507 may include software for showing groups of abnormal activities, or reports that indicate the type of code served by the web site that generates the most abnormal activity. For example, a security officer for a bank may determine that defensive actions are needed if most of the reported abnormal activity for its web site relates to content elements corresponding to money transfer operations-an indication that stale malicious code may be trying to access such elements surreptitiously.

Console 507 may also be multiple different consoles used by different employees of an operator of the system 500, and may be used for pre-analysis of web content before it is served, as part of determining how best to apply polymorphic transformations to the web code. For example, in combined manual and automatic analysis like that described above, an operator at console 507 may form or apply rules 522 that guide the transformation that is to be performed on the content when it is ultimately served. The rules may be written explicitly by the operator or may be provided by automatic analysis and approved by the operator. Alternatively, or in addition, the operator may perform actions in a graphical user interface (e.g., by selecting particular elements from the code by highlighting them with a pointer, and then selecting an operation from a menu of operations) and rules may be written consistent with those actions.

A central security console 508 may connect to a large number of web content providers, and may be run, for example, by an organization that provides the software for operating the security server systems 502a-502n. Such console 508 may access complex analytical and data analysis tools, such as tools that identify clustering of abnormal activities across thousands of client computers and sessions, so that an operator of the console 508 can focus on those clusters in order to diagnose them as malicious or benign, and then take steps to thwart any malicious activity.

In certain other implementations, the console 508 may have access to software for analyzing telemetry data received from a very large number of client computers that execute instrumentation code provided by the system 500. Such data may result from forms being re-written across a large number of web pages and web sites to include content that collects system information such as browser version, installed plug-ins, screen resolution, window size and position, operating system, network information, and the like. In addition, user interaction with served content may be characterized by such code, such as the speed with which a user interacts with a page, the path of a pointer over the page, and the like.

Such collected telemetry data, across many thousands of sessions and client devices, may be used by the console 508 to identify what is "natural" interaction with a particular page that is likely the result of legitimate human actions, and what is "unnatural" interaction that is likely the result of a bot interacting with the content. Statistical and machine learning methods may be used to identify patterns in such telemetry data, and to resolve bot candidates to particular client computers. Such client computers may then be handled in special manners by the system 500, may be blocked from interaction, or may have their operators notified that their computer is potentially running malicious software (e.g., by sending an e-mail to an account holder of a computer so that the malicious software cannot intercept it easily).

In certain implementations, the analysis of data returned from clients (e.g., via instrumentation code) may be used to identify the current effectiveness of currently-served security countermeasures, and to compare that effectiveness with effectiveness that is expected to be achieved by deploying alternative countermeasures. Such effectiveness of alternative countermeasures may be determined, at least initially, by serving a sub-set of client devices with such alternative countermeasures and identifying the effectiveness of the countermeasures at resisting malware, or by serving content with such countermeasures to an internal test base that simulates action by the currently-determined group of malware in a population of client devices. The package of applied countermeasures may thus be continuously tracked over time, and periodically changed to a different package of security countermeasures when the performance of the current countermeasures is determined to fall below a threshold level of effectiveness, and perhaps based on an amount of time the current package has been used, since long use of one package may be risky even if the system is not yet determining that the package has been compromised by a bot net in any significant manner.

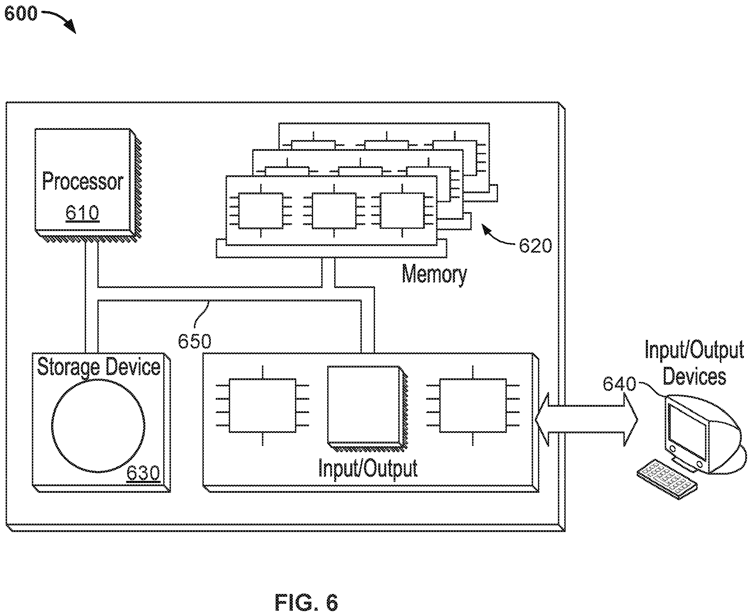

FIG. 6 shows an example of a computer system 600. The system 600 can be used for the operations described in association with any of the computer-implement methods described previously, according to one implementation. The system 600 is intended to include various forms of digital computers, such as laptops, desktops, workstations, personal digital assistants, servers, blade servers, mainframes, and other appropriate computers. The system 600 can also include mobile devices, such as personal digital assistants, cellular telephones, smartphones, and other similar computing devices. Additionally the system can include portable storage media, such as, Universal Serial Bus (USB) flash drives. For example, the USB flash drives may store operating systems and other applications. The USB flash drives can include input/output components, such as a wireless transmitter or USB connector that may be inserted into a USB port of another computing device.

The system 600 includes a processor 610, a memory 620, a storage device 630, and an input/output device 640. Each of the components 610, 620, 630, and 640 are interconnected using a system bus 650. The processor 610 is capable of processing instructions for execution within the system 600. The processor may be designed using any of a number of architectures. For example, the processor 610 may be a CISC (Complex Instruction Set Computers) processor, a RISC (Reduced Instruction Set Computer) processor, or a MISC (Minimal Instruction Set Computer) processor.

In one implementation, the processor 610 is a single-threaded processor. In another implementation, the processor 610 is a multi-threaded processor. The processor 610 is capable of processing instructions stored in the memory 620 or on the storage device 630 to display graphical information for a user interface on the input/output device 640.

The memory 620 stores information within the system 600. In one implementation, the memory 620 is a computer-readable medium. In one implementation, the memory 620 is a volatile memory unit. In another implementation, the memory 620 is a non-volatile memory unit.

The storage device 630 is capable of providing mass storage for the system 600. In one implementation, the storage device 630 is a computer-readable medium. In various different implementations, the storage device 630 may be a floppy disk device, a hard disk device, an optical disk device, or a tape device.

The input/output device 640 provides input/output operations for the system 600. In one implementation, the input/output device 640 includes a keyboard and/or pointing device. In another implementation, the input/output device 540 includes a display unit for displaying graphical user interfaces.

The features described can be implemented in digital electronic circuitry, or in computer hardware, firmware, software, or in combinations of them. The apparatus can be implemented in a computer program product tangibly embodied in an information carrier, e.g., in a machine-readable storage device for execution by a programmable processor; and method steps can be performed by a programmable processor executing a program of instructions to perform functions of the described implementations by operating on input data and generating output. The described features can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language, including compiled or interpreted languages, and it can be deployed in any form, including as a stand-alone program or as a module, component, subroutine, or other unit suitable for use in a computing environment.

Suitable processors for the execution of a program of instructions include, by way of example, both general and special purpose microprocessors, and the sole processor or one of multiple processors of any kind of computer. Generally, a processor will receive instructions and data from a read-only memory or a random access memory or both. The essential elements of a computer are a processor for executing instructions and one or more memories for storing instructions and data. Generally, a computer will also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

To provide for interaction with a user, the features can be implemented on a computer having a display device such as a CRT (cathode ray tube) or LCD (liquid crystal display) monitor for displaying information to the user and a keyboard and a pointing device such as a mouse or a trackball by which the user can provide input to the computer. Additionally, such activities can be implemented via touchscreen flat-panel displays and other appropriate mechanisms.

The features can be implemented in a computer system that includes a back-end component, such as a data server, or that includes a middleware component, such as an application server or an Internet server, or that includes a front-end component, such as a client computer having a graphical user interface or an Internet browser, or any combination of them. The components of the system can be connected by any form or medium of digital data communication such as a communication network. Examples of communication networks include a local area network ("LAN"), a wide area network ("WAN"), peer-to-peer networks (having ad-hoc or static members), grid computing infrastructures, and the Internet.

The computer system can include clients and servers. A client and server are generally remote from each other and typically interact through a network, such as the described one. The relationship of client and server arises by virtue of computer programs running on the respective computers and having a client-server relationship to each other.

While this specification contains many specific implementation details, these should not be construed as limitations on the scope of any inventions or of what may be claimed, but rather as descriptions of features specific to particular implementations of particular inventions. Certain features that are described in this specification in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products.

Thus, particular implementations of the subject matter have been described. Other implementations are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A computer-implemented security method, comprising:
serving, with a computer server sub-system (202, 207, 209) and to client computing devices, content that has been transformed using one or more first security countermeasures arranged to interfere with malware on the client computing devices;
identifying (306) an effectiveness level of the one or more first security countermeasures at resisting operation of the malware;
determining (308) that the effectiveness level has fallen below a threshold level of effectiveness; and
in response to determining that the one or more first security countermeasures have fallen below the threshold effectiveness level, changing (310) to serving code that has been transformed using one or more second security countermeasures that differ from the one or more first security countermeasures,
wherein the changing to serving code that has been transformed using said one or more second security countermeasures is also conducted if a maximum number of servings of the first security countermeasures is reached even though the first security countermeasures have not fallen below the threshold effectiveness level.

2. The computer-implemented security method of claim 1, wherein the one or more first security countermeasures include a particular security countermeasure that is common with the one or more second security countermeasures, so that the particular security countermeasure is employed before and after determining that the one or more first security countermeasures have fallen below the threshold effectiveness value.

3. The computer-implemented security method of claim 1, wherein the effectiveness level is determined using reports from instrumentation code that is served with the code that has been transformed and that executes on the client computing devices to monitor, alone or in combination, characteristics of the client computing devices, user interaction with the client computing devices, and third-party software interaction with the code that has been transformed.

4. The computer-implement security method of claim 1, further comprising:
determining that the one or more second security countermeasures are performing effectively when applied by the computer server sub-system; and
providing information to a second computer server sub-system to cause the second computer server sub-system to switch to applying the one or more second security countermeasures, wherein the second computer server sub-system is operated by an organization separate and distinct from an organization that operates the computer server sub-system; or
further comprising analyzing the content, before transforming the content, to identify elements in the content that can be polymorphically transformed without affecting a manner in which the content is presented to a user of a client, and creating a template that identifies (a) where polymorphic transformations can be made in the content, and (b) types of the polymorphic transformations.

5. The computer-implement security method of claim 1, wherein selecting the one or more second security countermeasures comprises checking sets of security countermeasures to identify whether the sets of security countermeasures will interfere with each other when applied together to served content.

6. A computer-implemented security system (202, 207, 209), comprising:
a web interface (202) arranged to receive requests for content from a plurality of clients and to serve content to the clients in response to the requests;
a content serving sub-system (202, 207, 209), J Z executable on a computer server system, arranged to serve through the web interface content that has been transformed using security countermeasures arranged to interfere with malware on the clients; and a security countermeasure selection sub-system (205) arranged to determine when to switch a package of security countermeasures applied to the content by the content serving sub-system, and to cause an updated package of countermeasures to be applied to the content;
wherein the security countermeasure selection sub-system is arranged to cause an updated package of countermeasures to be applied to the content in response to identifying that an effectiveness level of the one or more first security countermeasures at resisting operation of malware on the clients is operating below a threshold level, and
wherein the security countermeasure selection sub-system is arranged to cause an updated package of countermeasures to be applied to the content in response to identifying that the maximum number of servings for a particular countermeasure package has been exceeded.

7. The computer-implemented security system of claim 6, wherein the one or more first security countermeasures include a particular security countermeasure that is common with the one or more second security countermeasures that are subsequently applied by the system, so that the particular security countermeasure is employed before and after determining that the one or more first security countermeasures have fallen below the threshold level.

8. The computer-implemented security system of claim 6, wherein the effectiveness level is determined using reports from instrumentation code that is served with the code that has been transformed and that executes on the clients to monitor, alone or in combination, characteristics of the clients, user interaction with the clients, and third-party software interaction with the code that has been transformed; or
wherein the content serving sub -system is further arranged to analyze the content, before transforming the content, to identify elements in the content that can be polymorphically transformed without affecting a manner in which the content is presented to a user of a client, and creating a template that identifies where polymorphic transformations can be made in the content.

## Patentansprüche

1. Ein computerimplementiertes Sicherheitsverfahren, umfassend:
Bedienen von Inhalten, die mit einem Computer-Server-Subsystem (202, 207, 209) und an Client-Rechner-Vorrichtungen transformiert wurden unter Verwendung einer oder mehrerer erster Sicherheitsgegenmaßnahmen, die angeordnet sind, so dass sie mit Malware auf den Client-Rechner-Vorrichtungen interferieren;
Identifizieren (306) einer Wirksamkeitsstufe der einen oder mehreren ersten Sicherheitsgegenmaßnahmen, um sich dem Betrieb der Malware zu widersetzen;
Feststellen (308), dass die Wirksamkeitsstufe unter einen Schwellenwirksamkeitswert gefallen ist; und
als Reaktion auf das Feststellen, dass die einen oder mehreren ersten Sicherheitsgegenmaßnahmen unter den Schwellenwirksamkeitswert gefallen sind, Wechseln (310) zu Serving-Code, der unter Verwendung einer oder mehrerer zweiter Sicherheitsgegenmaßnahmen transformiert wurde, die sich von den ersten Sicherheitsgegenmaßnahmen unterscheiden,
wobei das Wechseln zu Serving-Code, der unter Verwendung jener einen oder mehreren zweiten Sicherheitsgegenmaßnahmen transformiert wurde, auch dann durchgeführt wird, wenn eine maximale Anzahl von Bedienungen der ersten Sicherheitsgegenmaßnahmen erreicht wird, obwohl die ersten Sicherheitsgegenmaßnahmen nicht unter den Schwellenwirksamkeitswert gefallen sind.

2. Das computerimplementierte Sicherheitsverfahren gemäß Anspruch 1, wobei die eine oder mehreren ersten Sicherheitsgegenmaßnahmen eine bestimmte Sicherheitsgegenmaßnahme umfasst, die mit der einen oder den mehreren zweiten Sicherheitsgegenmaßnahmen gemeinsam ist, so dass die bestimmte Sicherheitsgegenmaßnahme vor und nach dem Feststellen, dass die eine oder die mehreren ersten Sicherheitsgegenmaßnahmen unter den Schwellenwirksamkeitswert gefallen sind, angewendet wird.

3. Das computerimplementierte Sicherheitsverfahren gemäß Anspruch 1, wobei die Wirksamkeitsstufe unter Verwendung von Berichten des Instrumentencodes bestimmt wird, der mit dem transformierten Code bedient wird und der auf den Client-Computervorrichtungen ausgeführt wird, um allein oder in Kombination die Eigenschaften der Client-Computervorrichtungen, die Benutzerinteraktion mit den Client-Computervorrichtungen und die Interaktion von Software Dritter mit dem transformierten Code zu überwachen.

4. Das computerimplementierte Sicherheitsverfahren gemäß Anspruch 1, ferner umfassend:
Bestimmen, dass die eine oder mehreren zweiten Sicherheitsgegenmaßnahmen bei Anwendung durch das Computer-Server-Subsystem wirksam sind; und
Bereitstellen von Informationen an ein zweites Computer-Server-Subsystem, um das zweite Computer-Server-Subsystem dazu zu veranlassen, auf die Anwendung der einen oder mehreren zweiten Sicherheitsgegenmaßnahmen umzuschalten, wobei das zweite Computer-Server-Subsystem von einer Organisation betrieben wird, die von einer Organisation, die das Computer-Server-Subsystem betreibt, getrennt und verschieden ist; oder
ferner umfassend das Analysieren des Inhalts vor der Transformation des Inhalts, um Elemente im Inhalt zu identifizieren, die polymorph transformiert werden können, ohne die Art und Weise zu beeinflussen, in der der Inhalt einem Benutzer eines Clients präsentiert wird, und das Erstellen einer Vorlage, die identifiziert (a), wo polymorphe Transformationen im Inhalt vorgenommen werden können, und (b) Typen der polymorphen Transformationen.

5. Das computerimplementierte Sicherheitsverfahren gemäß Anspruch 1, wobei die Auswahl der einen oder mehreren zweiten Sicherheitsgegenmaßnahmen die Überprüfung von Sätzen von Sicherheitsgegenmaßnahmen umfasst, um zu identifizieren, ob die Sätze von Sicherheitsgegenmaßnahmen sich gegenseitig stören, wenn sie zusammen auf den bedienten Inhalt angewendet werden.

6. Ein computerimplementiertes Sicherheitssystem (202, 207, 209), umfassend:
eine Web-Schnittstelle (202), die angeordnet ist, so dass sie Anfragen nach Inhalten von einer Mehrzahl von Clients empfängt und den Clients als Antwort auf die Anfragen nach Inhalten zur Verfügung stellt;
ein Inhaltsbereitstellungs-Subsystem (202, 207, 209), das auf einem Computer-Serversystem ausführbar
ist, so angeordnet ist, dass es über die Web-Schnittstelle Inhalte bereitstellt, die unter Verwendung von Sicherheitsgegenmaßnahmen transformiert wurden, die so angeordnet sind, dass sie mit Malware auf den Clients interferieren; und
ein Sicherheitsgegenmaßnahmen-Auswahl-Subsystem (205), das angeordnet ist, so dass es bestimmt, wann es ein Paket von Sicherheitsgegenmaßnahmen umgeschaltet wird, das von dem den Inhalt bedienenden Subsystem auf den Inhalt angewendet wird, und bewirkt, dass ein aktualisiertes Paket von Gegenmaßnahmen auf den Inhalt angewendet wird;
wobei das Sicherheitsgegenmaßnahmen-Auswahl-Subsystem angeordnet ist, so dass es ein aktualisiertes Paket von Gegenmaßnahmen veranlasst, das auf den Inhalt als Reaktion auf die Feststellung angewendet wird, dass eine Wirksamkeitsstufe der einen oder mehreren ersten Sicherheitsgegenmaßnahmen beim Widersetzen gegen den Betrieb von Malware auf den Clients unterhalb eines Schwellenwerts arbeitet, und
wobei das Sicherheitsgegenmaßnahmen-Auswahl-Subsystem angeordnet ist, so dass es bewirkt, dass ein aktualisiertes Paket von Gegenmaßnahmen auf den Inhalt angewendet wird als Reaktion auf die Feststellung, dass die maximale Anzahl von Bedienungen für ein bestimmtes Gegenmaßnahmenpaket überschritten worden ist.

7. Das computerimplementierte Sicherheitssystem gemäß Anspruch 6, wobei die eine oder mehreren ersten Sicherheitsgegenmaßnahmen eine bestimmte Sicherheitsgegenmaßnahme beinhaltet, die mit der einen oder den mehreren zweiten Sicherheitsgegenmaßnahme(n) gemeinsam ist (sind), die anschließend von dem System angewandt wird (werden), so dass die bestimmte Sicherheitsgegenmaßnahme vor und nach der Feststellung, dass die eine oder die mehreren erste(n) Sicherheitsgegenmaßnahme(n) unter den Schwellenwert gefallen ist (sind), eingesetzt wird.

8. Das computerimplementierte Sicherheitssystem gemäß Anspruch 6, wobei die Wirksamkeitsstufe unter Verwendung von Berichten des Instrumentencodes bestimmt wird, der mit dem transformierten Code bedient wird und der auf den Clients ausgeführt wird, um allein oder in Kombination Eigenschaften der Clients, die Benutzerinteraktion mit den Clients und die Interaktion von Software Dritter mit dem transformierten Code zu überwachen; oder
wobei das inhaltsbedienende Subsystem ferner so angeordnet ist, dass es den Inhalt vor der Transformation des Inhalts analysiert, um Elemente im Inhalt zu identifizieren, die polymorph transformiert werden können, ohne die Art und Weise zu beeinflussen, in der der Inhalt einem Benutzer eines Klienten präsentiert wird, und um eine Vorlage zu erstellen, die identifiziert, wo polymorphe Transformationen im Inhalt vorgenommen werden können.

## Revendications

1. Procédé de sécurité mis en œuvre par ordinateur, comprenant :
la fourniture, avec un sous-système de serveur d'ordinateur (202, 207, 209) et à des dispositifs informatiques clients, d'un contenu qui a été transformé à l'aide d'une ou plusieurs premières contre-mesures de sécurité agencées pour interférer avec un logiciel malveillant sur les dispositifs informatiques clients ;
l'identification (306) d'un niveau d'efficacité des une ou plusieurs premières contre-mesures de sécurité au niveau d'un fonctionnement résistant du logiciel malveillant ;
le fait de déterminer (308) que le niveau d'efficacité est tombé en dessous d'un niveau de seuil d'efficacité ; et
en réponse au fait de déterminer que les contre-mesures de sécurité sont tombées en dessous du niveau de seuil d'efficacité, le changement (310) de fourniture de code qui a été transformé à l'aide d'une ou plusieurs secondes contre-mesures de sécurité qui diffèrent des une ou plusieurs premières contre-mesures de sécurité,
dans lequel le changement de fourniture de code qui a été transformé à l'aide desdites une ou plusieurs secondes contre-mesures de sécurité est également mené si un nombre maximal de fournitures des premières contre-mesures de sécurité est atteint même si les premières contre-mesures de sécurité ne sont pas tombées en dessous du niveau de seuil d'efficacité.

2. Procédé de sécurité mis en œuvre par ordinateur selon la revendication 1, dans lequel les une ou plusieurs premières contre-mesures de sécurité incluent une contre-mesure de sécurité particulière qui est commune aux une et plusieurs secondes contre-mesures de sécurité, de sorte que la contre-mesure de sécurité particulière est employée avant et après de déterminer que les une ou plusieurs premières contre-mesures de sécurité sont tombées en dessous de la valeur de seuil d'efficacité.

3. Procédé de sécurité mis en œuvre par ordinateur selon la revendication 1, dans lequel le niveau d'efficacité est déterminé à l'aide de rapports à partir d'un code d'instrumentation qui est fourni avec le code qui a été transformé et qui s'exécute sur les dispositifs informatiques clients pour surveiller, seul ou combiné, des caractéristiques des dispositifs informatiques clients, une interaction d'utilisateur avec les dispositifs informatiques clients et une interaction de logiciel de tierce partie avec le code qui a été transformé.

4. Procédé de sécurité mis en œuvre par ordinateur selon la revendication 1, comprenant en outre :
le fait de déterminer que les une ou plusieurs secondes contre-mesures de sécurité sont réalisées de manière efficace lorsqu'elles sont appliquées par le sous-système de serveur d'ordinateur ; et
la livraison d'informations à un second sous-système de serveur d'ordinateur pour amener le second sous-système de serveur d'ordinateur à commuter pour appliquer les une ou plusieurs secondes contre-mesures de sécurité, dans lequel le second sous-système de serveur d'ordinateur est mis en œuvre par une organisation séparée et distincte d'une organisation qui met en œuvre le sous-système de serveur d'ordinateur ; ou
comprenant en outre l'analyse du contenu, avant la transformation du contenu, pour identifier des éléments dans le contenu qui peuvent être transformés de manière polymorphe sans affecter une manière dans laquelle le contenu est présenté à un utilisateur d'un client, et la création d'un modèle qui identifie (a) où des transformations polymorphes peuvent être faites dans le contenu, et (b) des types des transformations polymorphes.

5. Procédé de sécurité mis en œuvre par ordinateur selon la revendication 1, dans lequel la sélection des une ou plusieurs secondes contre-mesures de sécurité comprend la vérification d'ensembles de contre-mesures de sécurité pour identifier si les ensembles de contre-mesures de sécurité interféreront les uns avec les autres lorsqu'ils sont appliqués ensemble au contenu fourni.

6. Système de sécurité mis en œuvre par ordinateur (202, 207, 209), comprenant :
une interface Web (202) agencée pour recevoir des demandes d'un contenu depuis une pluralité de clients et pour fournir le contenu aux clients en réponse aux demandes ;
un sous-système de fourniture de contenu (202, 207, 209), exécutable sur un système de serveur d'ordinateur, agencé pour fournir par le biais de l'interface Web un contenu qui a été transformé à l'aide de contre-mesures de sécurité agencées pour interférer avec un logiciel malveillant sur les clients ; et
un sous-système de sélection de contre-mesure de sécurité (205) agencé pour déterminer quand il faut commuter un paquet de contre-mesures de sécurité appliquées au contenu par le sous-système de fourniture de contenu, et pour amener un paquet de contre-mesures mis à jour à être appliqué au contenu ;
dans lequel le sous-système de sélection de contre-mesure de sécurité est agencé pour amener un paquet de contre-mesures mis à jour à être appliqué au contenu en réponse au fait d'identifier qu'un niveau d'efficacité des une ou plusieurs premières contre-mesures de sécurité au niveau d'un fonctionnement résistant d'un logiciel malveillant sur les clients fonctionne en dessous d'un niveau de seuil, et
dans lequel le sous-système de sélection de contre-mesure de sécurité est agencé pour amener un paquet de contre-mesures mis à jour à être appliqué au contenu en réponse au fait d'identifier que le nombre maximal de fournitures pour un paquet de contre-mesures particulier a été dépassé.

7. Système de sécurité mis en œuvre par ordinateur selon la revendication 6, dans lequel les une ou plusieurs premières contre-mesures de sécurité incluent une contre-mesure de sécurité particulière qui est commune aux une ou plusieurs secondes contre-mesures de sécurité qui sont appliquées de manière subséquente par le système, de sorte que la contre-mesure de sécurité particulière est employée avant et après le fait de déterminer que les une ou plusieurs premières contre-mesures de sécurité sont tombées en dessous du niveau de seuil.

8. Système de sécurité mis en œuvre par ordinateur selon la revendication 6, dans lequel le niveau d'efficacité est déterminé à l'aide de rapports à partir du code d'instrumentation qui est fourni avec le code qui a été transformé et qui s'exécute sur les clients pour surveiller, seul ou combiné, des caractéristiques des clients, une interaction d'utilisateur avec les clients et une interaction de logiciel de tierce partie avec le code qui a été transformé ; ou
dans lequel le sous-système de fourniture de contenu est en outre agencé pour analyser le contenu, avant la transformation du contenu, pour identifier des éléments dans le contenu qui peuvent être transformés de manière polymorphe sans affecter une manière dans laquelle le contenu est présenté à un utilisateur d'un client, et pour créer un modèle qui identifie où des transformations polymorphes peuvent être faites dans le contenu.
